# EUROPEAN PATENT SPECIFICATION

(11) **EP 2 954 196 B1**
(45) Date of publication and mention of the grant of the patent: **13.06.2018**
(21) Application number: 14708668.0
(22) Date of filing: 07.02.2014
(51) Int. Cl.: F03B 3/08

(54) **WATER TURBINE WITH REACTION-TYPE ROTOR**
WASSERTURBINE MIT REAKTIONSROTOR
TURBINE À EAU AVEC ROTOR À RÉACTION

(30) Priority: 07.02.2013 IT TO20130101
(43) Date of publication of application: 16.12.2015
(73) Proprietor: Met-al-Edil S.n.c. Di Marinoni Virgilio & Claudio, 13037 Serravalle Sesia (Vercelli) (IT)
(72) Inventor: SALVATO, Adelmo, I-13037 Serravalle Sesia (Vercelli) (IT); MARINONI, Virgilio, I-13037 Serravalle Sesia (Vercelli) (IT)
(74) Representative: Gallarotti, Franco
(86) International application number: PCT/IB2014/058851
(87) International publication number: WO 2014/122612

(56) References cited:
- EP-A2- 1 211 414
- WO-A2-2004/008829
- US-A1- 2003 033 808

## Description

### Field of the invention

The present invention relates to turbines in general and has been developed with particular reference to turbines for the production of hydroelectric power. More in general, the invention regards a machine designed to generate the rotary motion of a shaft via an impeller that exploits pressure, mass, and the centrifugal force produced by the thrust that an outgoing fluid exerts in order to obtain mechanical energy available for operation of other apparatuses.

### Background art

It is generally known that the mechanical power that can be obtained from the shaft of a turbine depends upon various parameters, amongst which assume of particular importance are the volumetric flow rate and the velocity of the flow of fluid at inlet. For this reason, the production of high-power turbines leads to the rise in the values of the volumetric flow rate at inlet and/or of the average velocity of the flow at inlet. This usually presupposes the construction of plants of significant dimensions, with high production, installation, and running costs, in addition to the availability of high values of volumetric flow rates and flow velocities of the fluid to be supplied to the turbine, with corresponding operating costs.

A very widespread type of turbine, in particular for the purposes of production of hydroelectric power, is the Pelton turbine. The Pelton turbine, which constitutes a classic example of action turbine, is distinguished by a considerable simplicity from the construction and maintenance standpoints, by a relatively high efficiency, and by a good reliability of operation. Pelton turbines present, however, the drawback of not being effectively usable with medium and low heads, for example in the region of a few meters, in so far as their efficiency in these operating conditions would be excessively low. It is, however, known that the majority of the heads convenient for production of energy, and especially of hydroelectric power, above all by means of small and very small production plants, are precisely the medium, low, and very low heads: in these situations, the exploitation of reduced heads usually entails the use of reaction turbines, such as Francis or Kaplan turbines, which are, however, more complicated and costly from the constructional standpoint, as well as being distinguished by higher maintenance costs, as compared to Pelton turbines.

EP1211414 A2 discloses a water turbine with a vertical shaft having two independent running wheels driven by active and reactive forces of water jets. The inflowing water sets an inner wheel in rotation, while the outer wheel is driven by the active force of the water jets coming from the nozzles of the inner wheel.

WO2004008829 A2 discloses turbines having a rotatable vessel and at least one outlet for discharging pressurized working fluid from the rotatable vessel to a lower pressure area to produce jet propulsion for rotating the rotatable vessel. The rotatable vessel may be provided with spacers to define a plurality of channels that extend from the peripheral part of the vessel as far as a central region thereof, and a plurality of channels that extend from the peripheral part of the vessel as far as an intermediate region thereof that is spatially comprised between the peripheral part and the central region.

### Summary and aim of the invention

In its general terms, the object of the present invention is to provide a turbine, in particular a hydraulic turbine, that has a relatively simple and inexpensive structure, but presents efficient operation and high performance levels even in the presence of relatively modest volumetric flow rates of the supply fluid and/or of medium, low, and very low heads. A correlated object of the invention is to provide a turbine that does not require excessive maintenance and that enables higher specific powers to be obtained given the same dimensions than turbines of a known type.

One or more of the aforesaid objects are achieved, according to the present invention, by a turbine having the characteristics specified in Claim 1. Preferential characteristics of the invention are specified in the dependent claims.

### Brief description of the drawings

Further purposes, characteristics, and advantages of the present invention will emerge clearly from the ensuing description, with reference to the annexed drawings, which are provided purely by way of non-limiting example and in which:
- Figure 1 is a schematic representation of a possible sphere of application of a turbine according to the invention;
- Figure 2 is a schematic lateral view, in partial cross section, of a turbine according to one embodiment of the invention;
- Figure 3 is a schematic exploded view of a turbine according to one embodiment of the invention;
- Figures 4, 5, and 6 are schematic views, respectively a perspective view, a side elevation, and a top plan view, of a flow-dividing member of a turbine according to the invention;
- Figures 7, 8, and 9 are schematic views, respectively a perspective view, a side elevation, and a top plan view, of a flow-deflecting member of a turbine according to the invention;
- Figures 10, 11, and 12 are schematic top plan views of a turbine according to one embodiment of the invention, in three different operating conditions; and
- Figure 13 is a partial and schematic representation of a turbine according to one embodiment of the invention, with some parts removed.

### Description of preferred embodiments of the invention

The reference to "*an embodiment*" or *"one embodiment*" within the framework of the present description is intended to indicate that a particular configuration, structure, or characteristic, described in relation to the embodiment is comprised in at least one embodiment. Hence, phrases such as "*in an embodiment*" or *"in one embodiment*" and the like, that may be present in various points of the present description, do not necessarily all refer to one and the same embodiment. Furthermore, the details, configurations, structures, or characteristics may be combined in any adequate way in one or more embodiments. The references used herein are merely for convenience and do not define the sphere of protection or the scope of the embodiments.

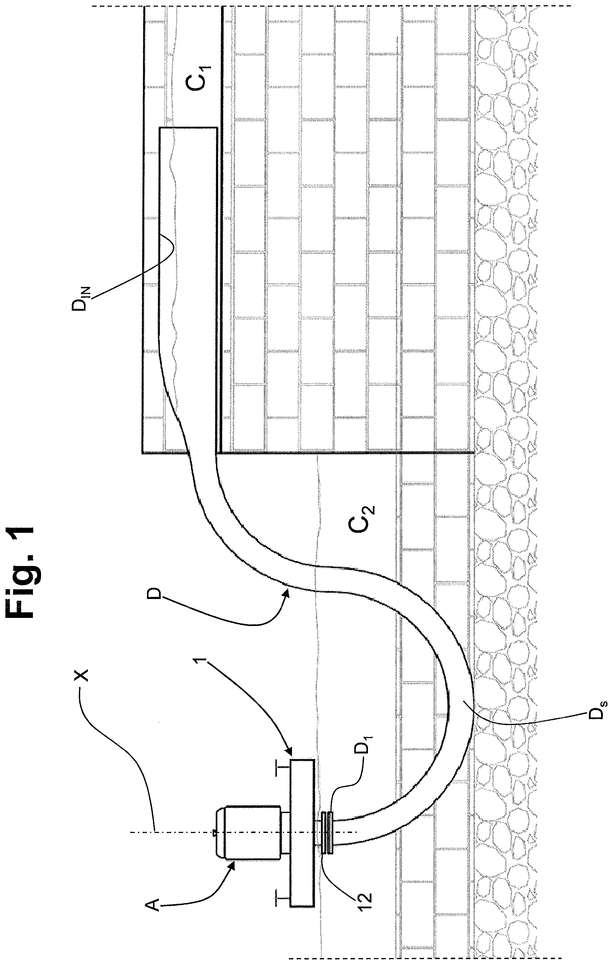

Figure 1 is a schematic representation, provided merely by way of example, of a possible use of a turbine according to one embodiment of the present invention, designated as a whole by 1. In the example, the turbine 1 is set in operation with the axis of rotation X of a corresponding impeller in a substantially vertical position, but in other possible applications - here not represented - the turbine can be installed with the axis X substantially horizontal or even inclined at some other angle.

In Figure 1, designated by C₁ and C₂ are two stretches of a generic channel for conveying a flow of water, between which there may be present also a relatively modest difference of level, roughly of between 0.5 and 3 m. Defined at the end of the upper stretch C₁ is the inlet Dᵢₙ - substantially shaped like a funnel or Venturi tube - of a duct D, which proceeds downwards to form a syphon Dₛ and then rises up to an inlet of the turbine 1. In the example, the syphon Dₛ extends at least in part underneath the bottom of the lower stretch of channel C₂. The distance in height between the lowest point of the syphon Dₛ and the stretch of channel C₁ may for example be twice the difference in level between the stretches C₁ and C₂. Once again with reference to the non-limiting example illustrated, the turbine 1 is preferably kept above the maximum level that can be reached by the water course in the stretch of channel C₂, via a supporting structure, here not represented, with the water leaving the turbine itself that can freely flow into the stretch C₂. Merely by way of example, in Figure 1 associated to the shaft of the turbine 1 is an alternator A for the production of electrical energy.

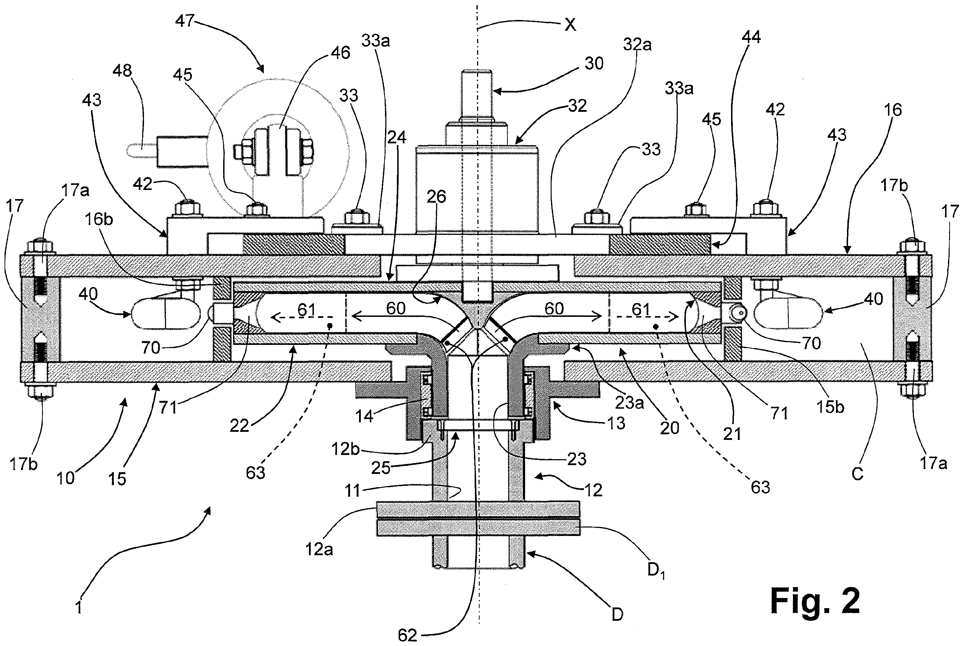

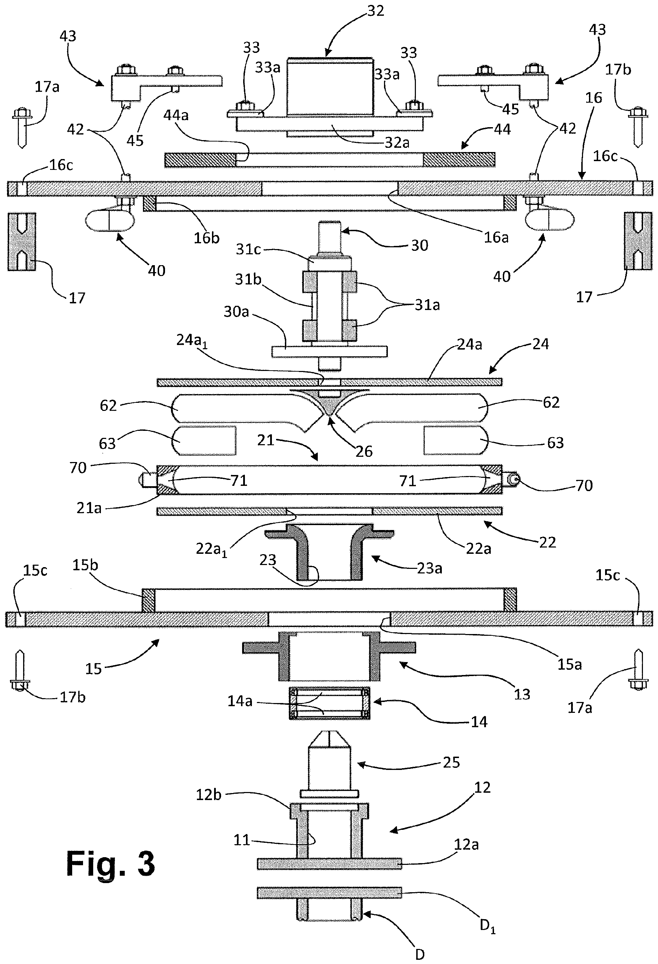

Represented schematically, via a cross-sectional view, in Figure 2 is a possible embodiment of a turbine 1 according to the invention. It should be noted that in this schematic figure, as in the subsequent Figure 3, some components have been represented in view and others in cross-section. In general terms, the turbine 1 has a stationary structure, designated as a whole by 10 and defined hereinafter for simplicity as "stator", with an inlet 11, for connection to a line for supplying a flow of a fluid, such as for example the duct D of Figure 1. The turbine 1 then comprises an impeller having a hollow movable structure, designated as a whole by 20 and defined hereinafter for simplicity as "rotor", rotatably supported by the stator 10 for turning about the respective axis X. As will emerge clearly hereinafter, the rotor 20 has a plurality of flow channels that extend from a peripheral part 21 of the rotor itself in the direction of a central region thereof. A front or lower part 22 of the rotor 20 has, in a central region thereof, an impeller inlet 23, preferably facing an end section of the inlet 11 of the stator 10. The inlet 23, which is generally coaxial to the axis X, is in fluid communication with the inlet 11 and the aforesaid flow channels, some of which are designated by 60 and 61. Once again in Figure 2, designated by 30 is a turbine shaft, operatively connected to a back or upper part 24 of the rotor 20 (in the example of Figure 1, the shaft 30 drives the alternator A).

As will emerge more clearly hereinafter, in a preferred embodiment the rotor is substantially disk-shaped; i.e., it has a generally flattened circular shape; preferentially, also the stator is at least substantially disk-shaped, defining a housing for the rotor 20. In more general terms, the stator 10 includes at least one of a first part (designated hereinafter by 15) facing the front 22 of the rotor 20, and a second part (designated hereinafter by 16) facing the back 24 of the rotor 20, where the aforesaid first and second parts are preferentially substantially parallel to each other and to the front and back of the rotor 20.

In general operation of the turbine, the fluid that enters the turbine 1 from the inlet 11 penetrates into the rotor 20 through the inlet 23, and then flows into the aforesaid flow channels and exits from outlets of the latter, which are in particular configured as inclined nozzles 70 that are at the peripheral part 21 of the rotor 20, thereby causing rotation of the rotor, and hence of the shaft 30.

With reference also to Figure 3, According to the invention, the turbine 1 comprises, at the impeller inlet 23, a flow divider 25 configured for sub-dividing axially the flow of the fluid at inlet to the rotor 20 into a plurality of sub-flows. The back 24 of the rotor 20 has, in a central region thereof, a substantially conical deflector member 26, inside the cavity of the rotor 20. The deflector member 26, which generally faces the impeller inlet 23, extends towards the flow divider 24 and is configured for directing the axial sub-flows created by the divider itself towards the flow channels defined in the rotor 20. According to the invention, the flow divider 25 is supported in a fixed position by the stationary structure 10. Preferentially, moreover, the flow divider 25 extends at least in part into the rotor 20, towards a tip of the deflecting member 26. Very preferably, the top of the flow divider 25 is at a slight distance from the tip of the deflecting member 26, indicatively a distance comprised between 0.1 and 8 mm.

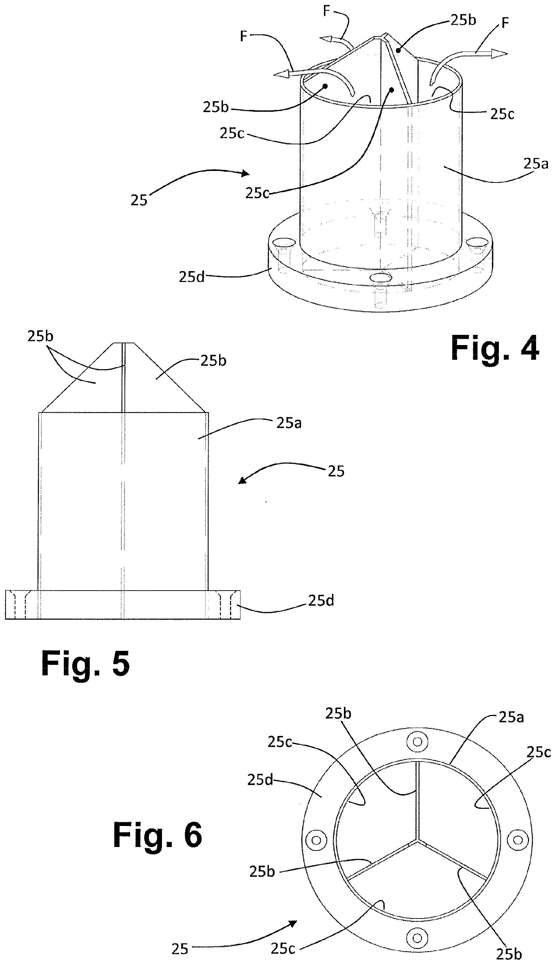

A possible embodiment of the flow divider 25 is visible in Figures 4-6, from which it may be appreciated how, in a preferred embodiment, the divider itself has a configuration that is generally tapered in an upper region thereof.

More in particular, in the non-limiting example illustrated, the flow divider 25 includes a tubular jacket 25a, preferably cylindrical, having an upper end and a lower end, and one or more divisory walls 25b that divide an internal volume of the tubular jacket 25a into a plurality of sub-channels or sub-chambers, designated by 25c, preferably having a section substantially shaped like a circular sector. In the example illustrated, three walls 25b are provided, which extend radially from the axis of the jacket 25a and divide the corresponding hollow volume thereof into three axial sub-channels. Preferentially, each divisory wall 25b projects in an axial direction from the jacket 25a at least at the corresponding upper end; very preferably, moreover, each divisory wall 25b has a generally tapered upper part, with an upper edge that extends inclined between a top of the wall itself and a upper edge of the jacket 25a. In this way, the generally axial sub-flows created by the divider 25 - denoted by F in Figure 4 - can be conveniently deflected, in combination with the action of the deflecting member 26, in at least approximately radial directions, i.e., towards the flow channels internal to the rotor 20.

In a preferred embodiment, the divisory wall 25b, or each divisory wall provided, has a generally plane upper end. This solution enables approach of the top of the divider 25 to the tip of the member 26, as may be clearly seen, for example, in Figure 2, without thereby jeopardizing precise division of the flow of liquid at inlet. On the other hand, in one embodiment (not represented), the top of the divider, albeit having a pointed configuration, can fit into a purposely provided cavity or housing made in the area of the tip of the body of the deflector member 26, in such a way in any case as to enable free rotation of the latter with respect to the former.

Preferentially, provided at the base of the jacket 25a is a flange formation 25c, having through holes for screws used for fixing of the divider 25 at to the inlet 11 of the stator.

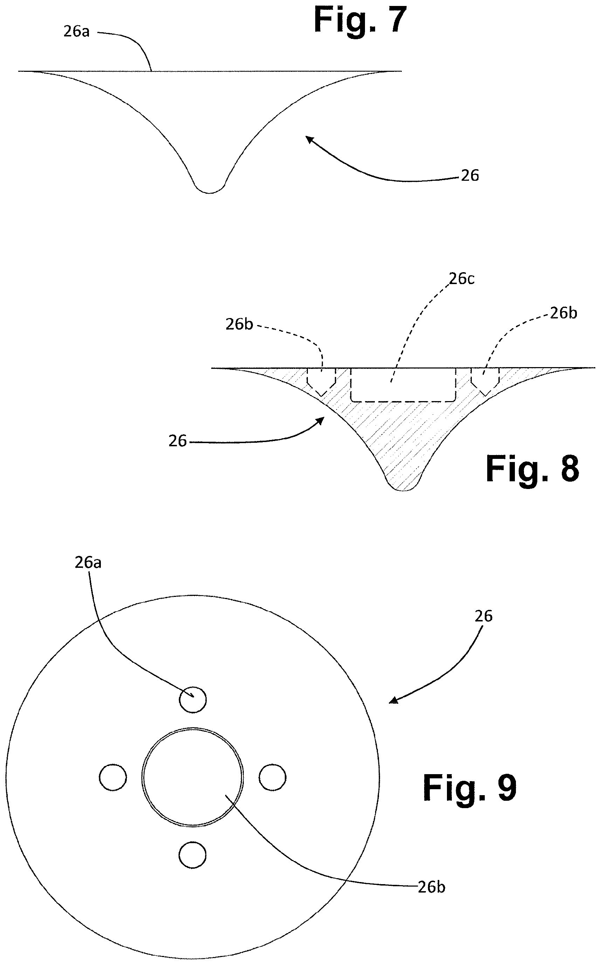

Illustrated, instead, in Figures 7-9 is the deflector member 26, here described for simplicity as being *"substantially conical*" : preferably, in actual fact, the member 26 has a substantially 360° conical exponential profile, that is substantially bell-shaped or with a curved profile; in other words - and as may be readily appreciated in Figures 7 and 8 - the profile of the member 26, when viewed in side elevation, resembles a Gaussian curve. The member 26 is located within the cavity of the rotor 20 and is fixed, at its base 26a, with respect to the back 24 of the rotor so as to be set directly facing the divider 25. As explained previously, with this arrangement the sub-flows F created by the divider 25 can be effectively directed into the flow channels of the rotor 20. In the embodiment exemplified, defined at the base 26a of the member 26 are internally threaded holes 26b, to enable it to be fixed to the back 24 of the rotor with threaded members. In the example, at the base 26a there is moreover preferably, but not necessarily, provided a central seat 26c for housing the bottom end of the turbine shaft 30.

The divider 25, together with the deflector 26, enables elimination of possible vortices produced by rotation of the impeller, in order to obtain a homogeneous flow of the water directed against the deflector member 26 and orient it into the flow channels where the centrifugal force develops. As will be seen hereinafter, within the hollow volume of the impeller 20 the water is directed into the flow channels 60, 61, which are preferably arranged substantially in a radial pattern and which convey the water itself towards the respective inclined nozzles 70.

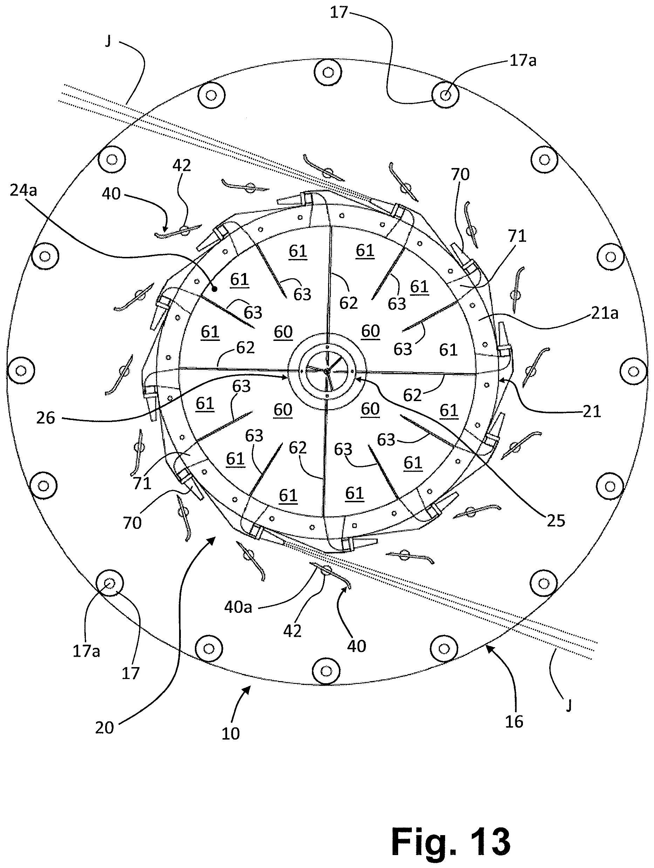

With reference once again to Figure 2, in a preferred embodiment, the turbine 1 comprises a plurality of contrast elements, two of which are designated by 40, which are preferably set along a circumference (see also Figure 13) and are supported by the stator 10, in a position generally facing the peripheral part 21 of the rotor 20, where the nozzles 70 are located. The presence of the contrast elements 40 is preferable, in so far as it affords an increase in the efficiency of the turbine, but does not constitute an essential characteristic of the invention.

In a preferred embodiment, the turbine 1 has at least one actuation system for varying in a controlled way the position of the contrast elements 40. For this purpose, the contrast elements 40 are preferably mounted on the stator 10 in a movable way, in order to vary the position of a contrast surface of the contrast elements themselves with respect to the jets of the fluid coming out the terminal nozzles 70 from the flow channels of the rotor 20. Two of these jets are represented by way of example in Figure 13, where they are designated by J. Preferentially, the elements 40 are mounted on the stator 10 so as to be angularly movable according to respective axes generally parallel to the axis of rotation X of the rotor 20.

In general, in at least one of the positions that can be assumed by the contrast elements 40, the corresponding contrast surface may be struck by the jets exiting from the rotor 20 at a first angle of incidence; in at least another position of the elements 40, the corresponding surface is struck by the jets exiting from the rotor 20 at a different angle of incidence. As will be seen hereinafter, the presence of the contrast elements 40 and the possibility of varying their position makes it possible to keep constant the centrifugal thrust of the rotor 20 in the event of variations of pressure of the flow at inlet, in particular in the event of pressure drops (given that the pressure is maximum at inlet to the turbines and is generally adjusted upstream).

In Figure 3, the structure of the turbine 1, in a preferential embodiment thereof, is illustrated in an exploded schematic view.

Designated by D₁ is a connection flange of the duct D for supplying the fluid, which is designed to provide a coupling with a flange part 12a of a lower tubular support 12, defining the inlet 11 of the turbine 1, made for example of metal material.

The lower support 12 has an upper ring-nut portion 12b, at which is fixed, for example by means of threaded members, the flow divider 25, which is also preferably made of metal material and is set in axis with the inlet 11. Associated to the lower support 12, and especially on the outside of its ring-nut portion 12b, is an upper tubular metal support 13, within which sealing means operate. In a preferred embodiment, the aforesaid sealing means include one or more gaskets 14a supported by a packing retainer 14. Preferentially, at least one of each gasket 14a and the packing retainer 14 is made at least in part of a high-strength material, such as a synthetic material with a base of PTFE or ECTFE; for example, a material that can be advantageously used for this purpose is Turcite®. As will emerge clearly hereinafter, a tubular part 23a of the rotor 20, which defines the impeller inlet 23, is fitted in the tubular part represented by the upper connector 12, with the aforesaid sealing means 14-14a set in between.

In one embodiment, the stator 10 has at least one portion that is substantially disk-shaped, i.e., having a generally flattened circular shape, defining a cavity or housing for the rotor 20, said housing being designated by C in Figure 2. In the non-limiting example of Figure 3, the upper support 13 is fixed to a lower load-bearing structure 15 of the stator 10, for example comprising a preferably disk-shaped metal plate with a central opening 15a where the support 13 is fixed. Fixed with respect to the upper face of the structure 15 is a peripheral wall 15b, preferably constituted by a metal ring, for example fixed in position via welding or by means of threaded members.

Designated by 16 is an upper load-bearing structure of the stator 10, preferably made like the bottom structure 15. Also the structure 16 may hence include a preferably disk-shaped metal plate, with a central opening 16a, fixed with respect to the lower face of which is a peripheral wall 16b, preferably constituted by a metal ring of a diameter substantially corresponding to that of the homologous wall 15b of the lower structure 15. Preferentially, at least one of the two structures 15 and 16 has an outer diameter greater than the outer diameter of the rotor 10 so as to have a respective peripheral region that projects in a radial direction beyond the peripheral part 21 of the rotor (see, for example, Figure 2). Advantageously, the contrast elements 40 referred to previously may be associated to such a peripheral region. In the example represented, the walls 15b, 16b have a diameter smaller than that of the plates that form the structures 15 and 16 so that the latter each have an aforesaid peripheral region, here annular, with the contrast elements 40 that are associated to the upper structure 16.

The presence of the walls 15b and 16b, albeit preferable, is not strictly necessary for the purposes of implementation of the invention. In general terms, the parts 15-16 of the stator 10 that define the housing C of the rotor 20 can form a peripheral part (here represented by the walls 15b and 16b), which is set facing the peripheral part 21 of the rotor 20 and is substantially coaxial therewith. This peripheral part of the stator, if present, preferentially defines a circumferential opening in order to enable outlet of the jets of fluid. For this purpose, in the example represented, the lower structure 15 and the upper structure 16 are rendered fixed with respect to one another with the tops of the respective peripheral walls 15b, 16b set substantially facing one another at a certain distance so as to define between them the aforesaid circumferential opening.

Fixing between the two structures 15, 16 may be obtained using fixing members on the outside of the housing C, in any case in positions such as not to interfere with rotation of the rotor 10. In one embodiment, such as the one illustrated, threaded members are provided for this purpose, arranged in the aforesaid peripheral region of the structures 15 and 16. With reference to Figures 2 and 3, the above fixing members include spacer elements 17, for example metal ones, provided with internally threaded blind holes at their two axial ends; screwed into these blind holes are threaded pins 17a, which pass through corresponding holes 15c and 16c provided in the peripheral part of the structures 15 and 16; fixing is completed by nuts 17b tightened at the outer ends of the aforesaid pins 17a.

As already mentioned, in a preferred embodiment, also the rotor 20 is substantially disk-shaped; i.e., it has a generally flattened circular shape, with the corresponding front part 22, back part 24, and peripheral part 21 (Figure 2) that delimit a hollow volume, which is preferably substantially cylindrical.

In the example represented, the structure of the rotor 20 includes a tubular part, here represented by an inlet sleeve 23a, which defines the impeller inlet 23 and is generally coaxial with the inlet 11 of the stator 10 and with the axis of rotation X of the rotor. Preferentially, the sleeve 23a has an inlet end with a diameter substantially corresponding to the end diameter of the inlet 11 and an outlet end that has a profile generally flared towards the inside of the rotor, in order to facilitate the flow of the incoming fluid. The sleeve 23a of the rotor is designed to be fitted in the upper support 13, with interposition of the sealing means represented by the packing retainer 14 with the corresponding gaskets 14a.

With reference once again to Figure 3, in the example the sleeve 23a is coupled to the central opening 22a₁ of a lower plate 22a of the rotor 20, which is preferably made of metal and is generally disk-shaped and belongs to the front of the rotor. The structure then includes an upper plate 24a, which belongs to the back of the rotor and is also preferably made of metal and is disk-shaped, with a diameter substantially equal to that of the lower plate 22a. Fixed between the two plates 22a, 24a is a ring 21a, which is also preferably made of metal and forms the peripheral part 21 of the rotor. As explained hereinafter, in the preferred embodiment of the invention, the hollow volume internal to the rotor is sub-divided into the flow channels, the outlets of which - including the nozzles 70 - are at its peripheral part 21, which here includes the ring 21a.

At the inner side of the upper plate 24a, and hence within the hollow volume of the rotor 20, there fixed in cenral position the deflecting member 26 described previously, in a position axially aligned to the impeller inlet 23 and to the flow divider 25. The shaft 30 of the turbine 1 is rendered fixed to the opposite side of the upper plate 24a, preferably but not necessarily at a central opening 24a₁ of the plate 24a, for example in combination with a corresponding fixing flange 30a.

Preferentially coupled to the shaft 30 are bearing means, or similar guide devices, designed to reduce the friction between parts in rotary movement, such as a unit including two bearings 31a with a spacer 31b set in between, this unit being packed on the shaft 30 by means of a ring nut 31c. The shaft 30, with the associated bearing means, passes through the central opening 16a of the upper structure 16, rendered fixed to which is a support 32 for housing the bearings, of any known conception, from which an end portion of the shaft 30 projects at the top. Fixing of the support 32 to the upper structure may be obtained via threaded members, some of which are designated by 33. Preferentially, the support 32 has a circular base flange 32a, designed to rest on the upper structure 16 of the stator 10.

In the example represented, and as may be seen also in Figure 2, mounted at the peripheral region of the upper structure (but it might also be the lower one) are the contrast elements 40, which each include a respective body carried by a corresponding shaft 42 associated to the upper structure 16, here configured as a threaded pin with associated constraining nuts. The body of the contrast elements 40 may comprise, for example, longitudinally extending paddles or blades, as exemplified in Figure 13, preferably with an at least slightly curved distal end.

As already mentioned, in one embodiment, the turbine 1 comprises at least one actuation system for varying in a controlled way the position of the contrast elements 40. This actuation system preferably comprises:
- a rotatable element, in particular an annular plate, constrained to the stator 10 so as to be angularly movable about the axis of rotation X of the rotor 10;
- transmission means, in particular a system of arms and pins, for connecting the shafts 42 of the contrast elements 40 to the aforesaid rotatable element; and
- actuator means, designed to bring about angular movements of the rotatable element with respect to the stator 10.

The arrangement is such that an angular motion of the aforesaid rotatable element, caused by the actuator means, is transferred by the aforesaid transmission means to the shafts 42, bringing about a corresponding angular motion of the contrast elements 40.

In a preferred embodiment, the aforesaid transmission means comprise a coupling substantially of a cam/cam-follower type. In this case, preferentially, the transmission means include a driving arm rendered fixed with respect to the shaft 42 of a respective contrast member 40 and defining a cam profile, in particular in the form of a slot, and a cam follower, preferably in the form of a pin, which is fixed with respect to the aforesaid rotatable element and engaged with the cam profile of the respective driving arm.

With reference in particular to the example illustrated, the contrast elements 40 are rotatably mounted about respective axes generally parallel to the axis X. In the example, the aforesaid axes are identified by the shafts 42, with the latter that are rotatably constrained in corresponding holes of the upper structure 16 and that are rendered fixed, at their upper ends, with respect to respective movable arms 43.

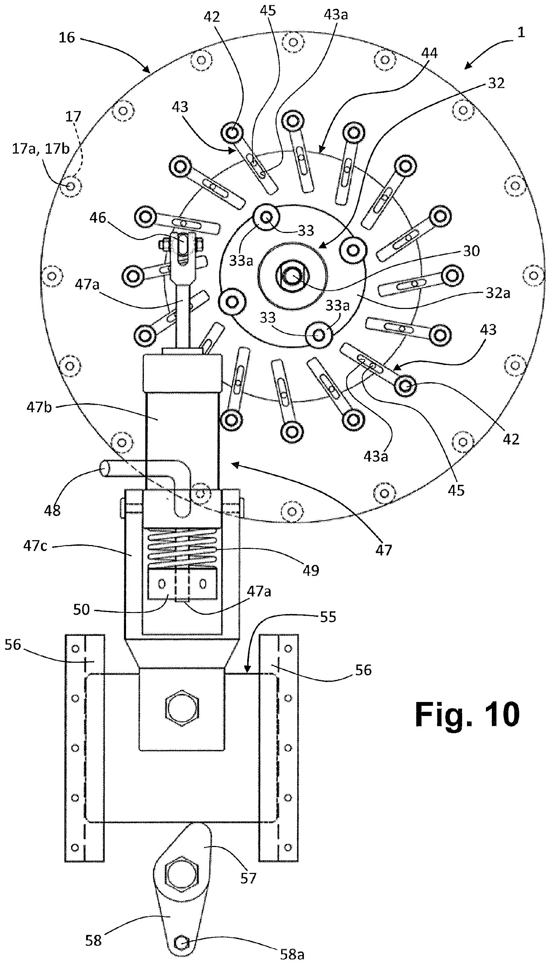

The arms 43, which are also angularly movable about the axes defined by the shafts 42, extend partially overlapping a guide ring 44, basically constituted by a disk rotatably mounted on the upper structure 16. In the example, the guide ring 44, made of metal material and appropriately ground, rests on the structure 16 and has a central opening 44a coupled to the circular flange 32a of the support 32 for the bearings, as may be clearly seen also in Figure 10. As may be noted also from Figure 10, the guide ring 44 may be advantageously constrained in position on the upper structure 16 exploiting appropriate washers 33a coupled to the threaded members 33 used for fixing the support 32 for the bearings in position.

The arms 43 are constrained to the guide ring 44 at their part that extends over the ring 44 itself, preferably with a coupling of a cam/cam-follower type. More in particular, with reference to Figure 10, coupled to the upper face of the ring 44 are pins 45 (for example, in the form of screws with a tempered stem or threaded pins with associated nuts) arranged basically along a circumference. Each of these pins 45 passes through a longitudinal slot 43a of a respective arm 43 so as to be free to slide therein.

In this way, as may be appreciated, via a generic actuator - for example, a hydraulic or electric actuator - it is possible cause a rotation of the guide ring 44, thereby bringing about angular displacement of the pins 45 and a consequent sliding thereof within the corresponding slots 43 a of the arms 43. Since the latter are rotatably constrained to the upper structure 16 by means of the corresponding shafts 42, they are thus displaced angularly following upon the displacement of the pins 45 in the slots 43a, thereby bringing about a rotation of the shafts 42 themselves, and thus an angular motion of the body of the contrast elements 40. The concept is well exemplified by the comparison between Figures 10, 11 and 12, which illustrate precisely three possible operative positions of the members 40.

In a particularly advantageous embodiment of the invention, the aforesaid actuation system is designed to vary the position of the contrast elements as a function of a pressure of the fluid upstream of the impeller inlet.

A possible embodiment in this sense is exemplified precisely in Figures 10-12. With reference to Figure 13, visible therein is an upper plan view of the turbine 1, with some of the elements described previously, and especially the upper structure 16 carrying the shafts 42 of the contrast elements 40, the arms 43, the guide ring 44, the support 32 for the bearings and the fixing members 33 of the support, which are also used - together with the washers 33a - for constraining the guide ring 44 in position.

Constrained to the ring 44, in particular by way of an articulated support 46 (visible also in Figure 2), is the distal end of the stem 47a of a hydraulic actuator, in particular a hydraulic cylinder, designated as a whole by 47. The actuator 47 has a cylinder 47b, associated to which is a corresponding support 47c, and is connected via a duct 48 in a point upstream of the impeller inlet 23, for example at a branching (not represented) of the inlet 11 of the stator of the stationary structure or of the supply duct D. In this way, the stem 47a is able to slide in the cylinder 47b as a result of the pressure of the fluid that supplies the turbine 1.

Preferentially, the actuator 47, as in the case exemplified, is a hydraulic cylinder with double stem, where the stem 47a has the distal end constrained to the guide ring 44 and where, operating between the proximal end of the stem 47a and the cylinder 47b is a spring 49. Preferentially, operatively associated to the proximal end of the stem 47a is an element 50 for adjusting the pre-load of the spring 49, for example in the form of a threaded ring nut, which also functions as contrast element for the spring itself. Via the adjustment element 50, i.e., by adjusting the pre-load of the spring 49, it is possible to set beforehand a "standard" position of the contrast elements 40, which will here be assumed to be an inoperative position, such that the incidence thereon of the jets exiting from the peripheral part of the rotor 20 is a minum one, i.e., with the blade-like body of the elements 40 that extend approximately parallel to the direction of the jets J, as exemplified in Figure 13.

The above setting is obtained on the basis of the pressure of the fluid upstream of the rotor, in conditions of normal operation of the hydraulic circuit that supplies the turbine 1. For instance, with reference to the example of Figure 1, setting of the normal position of the elements 40, obtained using the adjustment element 50, is obtained on the basis of the pressure of the water normally present in the duct D of Figure 1, which exists when the stretch of channel C₁ is supplied in a normal way (in other words, the pressure normally at inlet from the tube 48 of the actuator 47 balances the elastic reaction of the spring 49 as determined by means of the element 50).

This condition is schematically represented in Figure 10, where it may be noted how the stem 47a of the cylinder 47 is kept by the pressure of the fluid present in the duct 48 in a certain position, to which there corresponds a certain position of the shafts 42 of the contrast elements 40, this position being determined by the position of the guide ring 44 and of the transmission means represented by the pins 45 and by the arms 43 with the corresponding slots 43a. In such a position (see also Figure 13), the angle at which the jets exiting from the inclined nozzles 70 impinge upon the body of the contrast elements 40 is minimum.

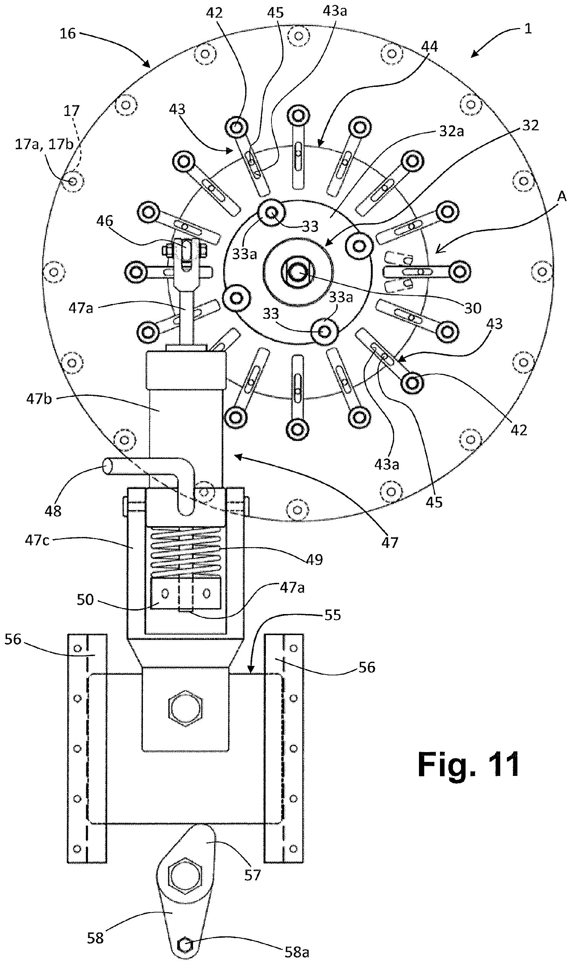

In the case where a pressure drop occurs in the duct 48, the elastic reaction of the spring 49 brings about a recession of the distal end of the stem 47a (downwards, as viewed in Figures 10-12), and thus an angular motion of the rotatable element represented by the guide ring 44 (in a counterclockwise direction, as viewed in Figures 10-12). The movement of the ring 44 causes displacement of the corresponding pins 45 coupled to the slots 43a of the arms 43, with a consequent angular motion of the latter (in a clockwise direction, as viewed in Figures 10-12) and thus of the shafts 42, as exemplified in Figure 11: in this way, a change of position of the contrast elements 40 is obtained, i.e., with reference to the example described here, a position where their contrast surface is set facing with a new angle the jets of fluid exiting from the rotor 20. The fact that these jets now impinge upon the surface of the contrast elements 40 at a certain angle has as consequence that the rotor 20 turns at a speed higher than the one that - if the elements 40 were in the initial position of Figures 10 or 13 - would be determined by just the pressure of the fluid: hence, in other words, in the condition of Figure 11 and following upon the variation of position of the contrast elements 40, a velocity of speed of the rotor 20 is obtained that is substantially similar to that reached in the "standard pressure" condition of Figure 10.

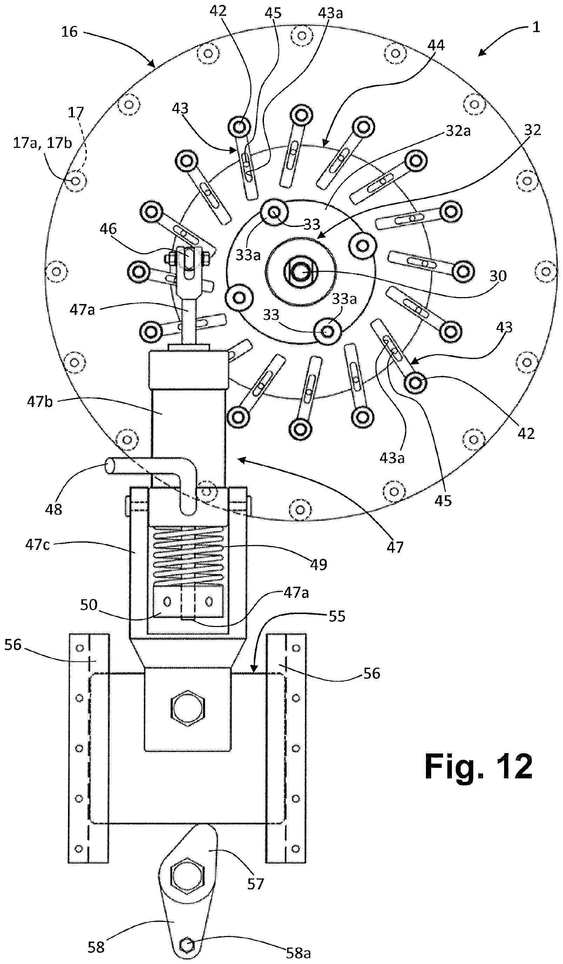

Figure 12 illustrates the situation that occurs in the event of a further drop in the supply pressure of the rotor 20, to which there corresponds a more marked recession of the stem 47a and more extensive angular movements of the ring 44, of the pins 45, of the arms 43, and hence of the shafts 42. In this way, the contrast elements 40 are brought to assume a position such that the angle of incidence between the jets exiting from the rotor 20 and the contrast surfaces 40a further increases and thereby determines a velocity of the rotor higher than the velocity that - if the elements 40 were in the position of Figure 10 or in that of Figure 11 - would be determined by the pressure of the fluid alone. Hence, in other words, a velocity of rotation of the rotor 20 is obtained that is substantially similar to the one reached in the conditions of Figures 10 and 11, notwithstanding the further drop in pressure.

The function afforded by the possibility of varying the incidence of the contrast elements 40 is hence that of maintaining a constant thrust in any condition of pressure of the fluid at inlet.

In some embodiments (not represented), the actuation system described with reference to Figures 10-12 can be driven by an electric actuator or by a pneumatic actuator, instead of by a hydraulic actuator, provided that in any case the latter is governed as a function of the pressure upstream of the impeller inlet, for example detected via appropriate sensor means (in the case of electrical actuation) and/or by means of an arrangement similar to the one illustrated (in the case of a pneumatic actuator).

In one embodiment, it is also possible to envisage an actuation system including two different actuators, of which a first actuator governed as a function of the pressure of the fluid that supplies the rotor 20 and a second actuator governed by an external control system, in particular for controlling a working position of the first actuator.

Also such an embodiment is exemplified in Figures 10-12, where the actuator 47 has a movable supporting structure operatively associated to guide means, with a further actuator that can be controlled for varying the position of the above supporting structure with respect to the above guide means. More in particular, in the example, the supporting structure of the actuator 47 includes a slide 55, here associated to the support 47c, slidably mounted on respective guides 56 stationary with respect to the slide, here so as to enable reciprocating sliding in the direction of the stem 47a of the actuator 47. Associated to the slide 55 is a respective transmission, configured to enable variation of the position of the slide itself with respect to the guides 56 and hence, in the final analysis, variation of the axial position of the actuator 47. In one embodiment, such as the one exemplified in Figures 10-12, the aforesaid transmission includes a cam member 57 cooperating with the slide 55, especially with a bottom side thereof, with this cam member that is associated to a driving arm 58 angularly displaceable by means of a second actuator, not represented, for example an electric actuator having a rotatable shaft, represented schematically and designated by 58a, which can be driven in two opposite directions. As may be appreciated, when the shaft 58a is driven, for example, in a clockwise direction, the slide 55 is free to drop (with reference to the case illustrated) on the guides 56, thereby causing a drop of the actuator 47 as a whole. It will be appreciated that in this way, even in conditions of constant pressure in the tube 48 of the actuator 47, it is possible to cause an effect similar to what has just been described, which occurs in the event of a pressure drop. In other words, then, by varying the position of the actuator 47, the position of its stem 47a can be varied, thereby causing angular motion of the guide ring 44, with the associated pins 45 and arms 43, and hence, in the final analysis, of the shafts 42 of the contrast elements 40. It goes without saying that by causing a rotation of the shaft 58a in the opposite direction and by the same amount as the previous one it is possible to re-establish the initial conditions. It will be appreciated that, in other embodiments (not represented), the second actuation system described can be used irrespective of the presence of the first actuation system described, also for replacing the functions thereof.

In Figure 13, the turbine 1 is represented in top plan view, limitedly to some of its parts in order to highlight the internal structure of the rotor. As already mentioned, in a preferred embodiment, the rotor 20 is substantially disk-shaped, i.e., having a generally flattened circular shape, with the respective front, back and peripheral parts that delimit an empty space, which is preferably substantially cylindrical and in which the flow channels, designated by 60 and 61, extend.

According to the invention, the plurality of flow channels 60, 61 comprises:
- a plurality of channels 60 that extend from the peripheral part 21 of the rotor 20 as far as a central region thereof; and
- a plurality of channels 61 that extend from the peripheral part 21 of the rotor 20 as far as an intermediate region thereof that is spatially comprised between the peripheral part 21 and the aforesaid central region.

In the embodiment exemplified, the flow channels 60 and 61 have an increasing section of passage, very preferably increasing in a substantially progressive way towards the peripheral part 21 of the rotor 20, where the outlets including the nozzles 70 are located: with reference in particular to the embodiment exemplified in Figure 13, the channels 60 and 61 have a profile in top plan view at least approximately having the shape of a circular sector, open towards the impeller inlet. In one embodiment, such as the one represented, the height of the flow channels 60, 61 - defined by the front 22 and by the back 24 of the rotor (Figures 2 and 3), set generally parallel to one another - is substantially constant, and provided within the cylindrical volume of the rotor are a plurality of radial walls, which laterally delimit the flow channels 60, 61 and define between them a dimension of width of the channels themselves, as has been said a dimension increasing towards the peripheral part 21 of the rotor 20.

In the preferred embodiment, the flow channels of the rotor comprise a plurality of primary channels, designated by 60, and a plurality of secondary channels, designated by 61. The primary channels 60 have an inlet closer to the impeller inlet, set in axis with which are the divider 25 and the deflector 26, with respect to the inlet of the secondary channels 61. The primary channels 60 and the secondary channels 61 preferably extend in a radial direction of the rotor 20, with each primary channel 60 that is sub-divided into a plurality of secondary channels 61 or else with one or more secondary channels 61 that alternate with the primary channels 60. In the example, the internal volume of the rotor 20 is divided into an even number of primary channels 60 (four channels 60, in the example), each of which is divided into an odd number of secondary channels 61 (three channels 61, in the example), with a total of twelve outlet nozzles 70, each at a sub-channel 61. Alternative arrangements are obviously possible, with a different number of channels and sub-channels, in particular depending on the diameter of the internal volume of the impeller.

The radial walls referred to previously are basically configured as septums or partitions, preferably but not necessarily metal ones, the upper and lower edges of which bear upon the inner side of the plates 22a and 24a (Figure 3) of the rotor and the outer edge of which bears upon the inner side of the ring 21a.

In the example, where the primary channels and the secondary channels are provided, the aforesaid walls comprise first radial walls 62 and second radial walls 63 having different lengths in such a way that the first radial walls 62, which are longer, sub-divide the internal cavity of the rotor 20 into a plurality of channels 60, whereas the second radial walls 63, which are shorter, sub-divide the channels 60 into a plurality of channels 61.

The walls 62 and 63 preferably have edges with a profile such as to enable a relatively precise coupling thereof to the lower part 22, upper part 24, and peripheral part 21 of the rotor. For instance, with reference also to Figure 3, in one embodiment the walls 62, 63 have an outer end with a generally curved profile so that it can couple to an inner concave profile of the ring 21a that forms the peripheral part of the rotor. The walls 62 and 63 may, for example, be fixed in position with welds, or else with threaded members or once again by means of purposely provided seats defined on the inner side of the parts 21, 22 and 24 of the structure of the rotor.

As has been said, in the embodiment illustrated, the walls 62 and 63 have different lengths. In a preferred embodiment, the longer walls 62 substantially extend as far as the impeller inlet 23. In this case, preferentially, the walls 62 have their end close to the impeller inlet that is shaped in a way that is substantially congruent with the profile of at least one of the deflector member 26 and the impeller inlet. For instance, as may be seen in Figures 2 and 3, the end portion of the walls 62 close to the impeller inlet is here generally arched so as to follow the profile of the member 26 and of the sleeve 23a (in one embodiment, the member 26 and/or the sleeve 23a may include surface recesses in which at least part of the arched portion of the walls 62 couples). In the embodiment illustrated, the corresponding end edge of the walls 62 is located at a slight distance from the upper part of the flow divider 25, for example up to a distance of 1 cm in order not to create an obstacle to rotation of the impeller. In any case, the distance between the aforesaid end edge and the divider 25 and/or the impeller inlet 23 is chosen according to the type of use of the turbine 1: in general terms, the length of the walls 62 is smaller (and hence the aforesaid distance is greater) when the application envisages high velocity or high pressure of the fluid at inlet; for applications with lower velocities or pressures the turbine will be provided with longer walls 62 (and hence with a shorter distance of their inner edge from the deflector 25 and/or from the inlet 23), as in the case exemplified.

In the example, the walls 62 and 63 are substantially rectilinear, but falling within the scope of the invention is the possible use of curved or otherwise shaped walls.

As may be noted from Figure 13, the primary channels 60 extend from the peripheral part 21 of the rotor 20 as far as its central region, where the impeller inlet is located, here not indicated but set in axis with which are the divider 25 and the deflector 26, whereas the secondary channels 61 extend from the peripheral part 21 as far as its intermediate region, which is spatially comprised between the peripheral part 21 and the aforesaid central region.

The outlets of the flow channels, here in particular the outlets of the channels 61, comprise respective nozzles 70 at the peripheral part of the rotor, and especially at its ring 21a. The nozzles 70 face, with their corresponding outlets, in a direction generally opposite to the predetermined direction of rotation of the rotor 20, for example with an inclination of approximately 90° with respect to the radius of the rotor, but not excluded from the invention is the case of nozzles with variable or adjustable inclination, for example up to 110°, with appropriate constructional variants. Preferentially, as may be noted for example in Figures 2, 3, and 13, the outlets of the flow channels include a terminal section 71 upstream of the nozzles 70, which has a profile at least in part tapered towards the respective nozzle. Preferentially, the terminal sections 71 are defined immediately upstream of the areas of union between the walls 62, 63 and the ring 21a, with reference to the direction of rotation of the impeller. The shape of the outlet of the nozzles 70 may be different according to the type of application: in general, for use of the turbine in combination with low pressures and/or modest heads, the outlet of the nozzles 70 is preferably slot-shaped.

Operation of the turbine according to the invention is based upon the exploitation of the kinetic mass of the fluid supplied, which, conveyed inside the turbine impeller 20, is appropriately channelled towards the outside so that it exit from the nozzles 70, the number of which varies in proportion to the size of the turbine 1, thus creating the circular motion that is transmitted to the shaft 30. The flow at outlet is hence not free, but is appropriately conveyed and directed in a specific way to obtain a reaction of centrifugal force. The propellant force that brings about rotation is hence developed principally inside the impeller 20, creating a compression that increases the thrust in proportion to the radius of the impeller itself.

The pressure of the water at outlet, enhanced by the nozzles 70, impacts against the contrast elements 40 and imparts the rotary motion on the impeller 20, which increases above all thanks to the centrifugal action produced by the rotation itself of the impeller. The centrifugal force developed proves to be a determining factor in compensating for and minimizing the power losses, due to mechanical and hydrodynamic factors, proper instead to traditional turbines. In the body of the impeller 20, the incoming flow is axially divided by the divider 25 into the sub-flows directed onto the deflector 26, which expands them uniformly causing channelling thereof first into the flow channels 60 and then into the flow channels 61, for increasing the outlet speed. The terminal sections 71 of the channels 60, 61 are defined in the ring 21a, to which the outlet and thrust nozzles 70 correspond. As a result of the thrust generated by the pressure at outlet that is set up in the flow channels, rotation of the impeller 20 takes place, incremented by the centrifugal force that is automatically triggered. Fixed on the back 24 of the impeller is the upright shaft 30, which forms a single body with the impeller itself, receiving therefrom the rotary motion that will in turn be transmitted to the energy generator, here exemplified by an alternator, or to another device connected thereto.

The adjustment system described previously with reference to Figures 10-12 has basically the purpose of keeping the centrifugal thrust of the rotor 20 constant, with impact of the water exiting from the nozzles 70 against the contrast elements 40, the aim being to prevent any possible power jumps due to variations of pressure of the flow at inlet and/or to modify the power generated by means of the shaft 30, for example in function of the the needs of the electrical grid supplied by the alternator driven by the shaft 30 itself. Compensation of the oscillations in pressure, and hence in power, takes place with the bidirectional orientation of the contrast elements 40, in order to modify the angle of incidence of the jets coming from the nozzles 70, increasing or decreasing the force of thrust impressed by the water at outlet. The adjustment system acts automatically, being governed by the very pressure of the flow at inlet. The same type of adjustment can be obtained, irrespective of variations of pressure or volumetric flow rate of the fluid at inlet, by the actuation system here including the slide 55, the guides 56, the cams 57, the arm 58, and the actuator 58a: in relation to the power requirements (for example, of the electric-power grid or other device operatively connected to the shaft 30), a sensor governs the actuator 58a, which, via the cam 57, enables displacement of the actuator 47.

Merely by way of indication, a small- or medium-sized turbine of the type described may have an impeller with a diameter of approximately 400 mm and a height of approximately 60 mm, i.e., with a substantially cylindrical internal volume of approximately 380 mm in diameter and approximately 40 mm in height divided into four primary channels and twelve secondary channels as represented, with twelve nozzles 70 (as has been mentioned, the number of flow channels and nozzles may vary in proportion to the size of the turbine). Practical tests conducted by the present applicant with such a turbine have made it possible to ascertain that it has a very wide operating range, obtaining generation of force already starting from pressures at inlet of 0.8 bar with a volumetric flow rate of 5 l/s and with a velocity of rotation of the impeller of from 200 r.p.m. to more than 2,000 r.p.m., which can be obtained with an increase of pressure of the fluid, enabling an optimal operating torque of 1,500 r.p.m. to be achieved, with a frequency of 50 Hz three-phase with synchronous alternator.

The turbine may evidently be sized to produce different amounts of energy, from small to high requirements. Small-sized models may find advantageous application, for example, in mountainous areas, where the cost of fixed electrical lines is very high and, on the other hand, there is an extensive availability of modest but constant water supply. In this context, a simple channel with a small tank enables supply of a turbine 1 for production, for example, of 3 kWh, which may be easily increased in proportion to the volumetric flow rate of water available. The waste water from the turbine 1 may be further used downstream, by other turbines 1, depending on the volumetric flow rate available.

The turbine according to the invention finds preferred application for the production of electrical energy via a generator (specifically, an alternator), with non-pollutant modalities and using renewable sources, and is suitable for use of water supplied by means of a water pipe supplied with constant flow, which does not require complex hydraulic works. As has been mentioned, on the other hand, the turbine according to the invention may more in general be used for obtaining mechanical energy available for operation of other apparatuses.

The turbine according to the invention is particularly simple from a constructional standpoint, to the advantage of containment of its production costs and of its reliability in operation, with modest maintenance and running costs, and enables high yield ratios to be obtained even with modest heads.

It is clear that numerous variants can be made by the person skilled in the branch to the turbine described by way of example, without thereby departing from the scope of the invention as defined in the ensuing claims.

The invention has been described with particular reference to a turbine operating with a fluid in the liquid phase, but its supply with fluids in the gaseous phase, for example steam, is not excluded from the scope of the invention itself. In the case of use for the production of electrical energy, alternators of a synchronous or asynchronous type, according to the kind of application, may be coupled to the turbine shaft directly or with interposition of speed variators for inverter applications. In variant embodiments (not illustrated), the stator 20 can have a structure simpler than the one exemplified herein: it will be appreciated, for example, that in other embodiments the lower structure 15 may be omitted. It goes without saying that the structures 15 and 16 do not necessarily need to have a circular outer profile, even though this profile is preferable; the same applies for the front 22 and the back 24 of the rotor.

## Claims

1. A turbine, comprising a stationary structure (10), having an inlet (11) for connection to a supply line (D) for a flow of a fluid, and an impeller (20), having a hollow movable structure (21-24) rotatably supported by the stationary structure (10) to rotate about a respective axis (X), the movable structure having a front (22), a back (24) and a peripheral part (21),
wherein the movable structure (21-24) has a plurality of flow channels (60, 61) that extend from the peripheral part (21) of the movable structure (21-24) towards a central region thereof,
wherein the movable structure (21-24) has, at a central region of its front (22), an impeller inlet (23) in fluid communication with the inlet (11) of the stationary structure (10) and with the flow channels (60, 61), the impeller inlet (23) preferably substantially facing an end section of the inlet (11) of the stationary structure (10),
and wherein a drive shaft (30) is operatively connected to the back (24) of the movable structure (21-24),
in such a way that the fluid that enters the turbine (1) from the inlet (11) of the stationary structure (10) flows into the movable structure (21-24) via the impeller inlet (23), to then flow into the flow channels (60, 61) and exits therefrom in the form of jets (J) via respective outlets (70, 71) at the peripheral part (21) of the movable structure (21-24), thereby causing rotation of the latter and hence of the drive shaft (30),
wherein the front (22), the back (24), and the peripheral part (21) of the movable structure (21-24) delimit a hollow volume of the movable structure (21-24), in which the flow channels (60, 61) of said plurality extend, the front (22) and the back (24) of the movable structure (21-24) preferably being substantially parallel to each other, and wherein the plurality of flow channels (60, 61) comprises:
- a plurality of channels (60) that extend from the peripheral part (21) of the movable structure (21-24) as far as a central region thereof; and
- a plurality of channels (61) that extend from the peripheral part (21) of the movable structure (21-24) as far as an intermediate region thereof that is spatially comprised between the peripheral part (21) and said central region,
wherein the turbine (1) further comprises, at the impeller inlet (23), a flow divider (25) supported in a fixed position by the stationary structure (10) and configured for sub-dividing the flow of the fluid entering the movable structure (21-24) into a plurality of sub-flows (F), and
wherein the back (24) of the movable structure (21-24) has, in a central region thereof, a substantially conical deflector member (26) that generally faces the impeller inlet (23) and that extends towards the flow divider (25), the deflector member (26) being configured for directing the sub-flows (F) towards the flow channels (60, 61).

2. The turbine according to Claim 1, wherein the flow divider (25) extends at least in part into the movable structure (21-24), towards a tip of the deflector member (26), the flow divider (25) having a top which is preferably at a distance from a tip of the deflector member (26) comprised between 0.1 and 8 mm.

3. The turbine according to Claim 2, wherein the flow divider (25) has a configuration that is generally tapered in an upper region thereof including said top.

4. The turbine according to Claim 1, wherein the flow divider (25) includes a tubular jacket (25a), having an upper end and a lower end, and one or more divisory walls (25b) that divide an internal volume of the tubular jacket (25a) into a plurality of sub-channels (25c).

5. The turbine according to Claim 4, wherein said one or more divisor walls (25b) comprise three walls, which extend radially from a central axis of the tubular jacket (25a) and divide the corresponding internal volume into three axial sub-channels (25c).

6. The turbine according to Claim 4 or 5, wherein each divisory wall (25b) projects in an axial direction from the tubular jacket (25a) at least at the corresponding upper end.

7. The turbine according to any one of claims 4-6, wherein each divisory wall (25b) has a generally tapered upper part, with an upper edge that extends inclined between a top of the divisory wall (25b) and an upper edge of the jacket (25a).

8. The turbine according to Claim 1, wherein the plurality of flow channels (60, 61) comprises a plurality of primary channels (60) and a plurality of secondary channels (61), the primary channels (60) having an inlet which is closer to the impeller inlet (23) than the inlet of the secondary channels (61), and wherein each primary channel (60) is sub-divided into a plurality of secondary channels (61) or else one or more secondary channels (61) is/are set between the primary channels (60).

9. The turbine according to Claim 8, wherein the secondary channels (61) each have a respective outlet (70, 71) comprising a nozzle (70) at the peripheral wall (21) of the movable structure (21-24).

10. The turbine according to Claim 1 or Claim 8, wherein within a hollow volume of the movable structure (21-24) a plurality of walls (62, 63) delimit the flow channels (60, 61) laterally.

11. The turbine according to Claim 10, wherein said walls (62, 63) are curved walls.

12. The turbine according to Claim 1, wherein the turbine (1) comprises a plurality of contrast elements (40), which are set along a circumference and are supported by the stationary structure (10), in a position generally facing the peripheral part (21) of the movable structure (21-24) where the outlets (70, 71) are located.

13. The turbine according to Claim 12, wherein the contrast elements (40) are mounted on the stationary structure (10) so as to be angularly movable about respective axes generally parallel to the axis of rotation (X) of the movable structure (21-24), in order to vary the position of a contrast surface of the contrast elements (40) with respect to the jets (J) of the fluid exiting the outlets (70, 71) of the flow channels (60, 61), and
wherein the turbine (1) has at least one actuation system (44; 47, 55-58) for varying in a controlled way the angular position of the contrast elements (40) about the respective axes, thereby varying the angle of incidence of the jets (J) of the fluid exiting the outlets (70, 71) with respect to the contrast surface of the contrast elements (40).

14. The turbine according to Claim 13, wherein the actuation system (44, 47, 55-58) is designed to vary the angular position of the contrast elements (40) about the respective axes as a function of a pressure of the fluid upstream of the impeller inlet (23).

15. The turbine according to Claim 13, wherein
- the stationary structure (10) includes at least one of a first part (15) facing the front (22) of the movable structure (21-24), and a second part (16) facing the back (24) of the movable structure (21-24),
- the contrast elements (40) are mounted at a peripheral region of one of the first and second parts (15, 16) of the stationary structure (10), each contrast element (40) including a respective body carried by a corresponding shaft (42) associated to said one of the first and second parts (15, 16) of the stationary structure (10),
- the actuation system (44, 47, 55-58) comprises:
- a rotatable element (44), constrained to the stationary structure (10) so as to be angularly movable about the axis of rotation (X) of the movable structure (21-24);
- transmission means (55-58), for connecting the shafts (42) of the contrast elements (40) to said rotatable element (44); and
- actuator means (47), designed to bring about angular movements of the rotatable element (44) with respect to the stationary structure (10),
such that an angular motion of said rotatable element (44), caused by the actuator means (47), is transferred by said transmission means (55-58) to the shafts (42) of the contrast elements (40), thereby bringing about a corresponding angular motion of the contrast elements (40) about the respective axes.

## Patentansprüche

1. Turbine, umfassend eine stationäre Struktur (10), die einen Einlass (11) zur Verbindung mit einer Versorgungsleitung (D) für eine Strömung eines Fluids aufweist und einen Impeller (20), der eine hohle bewegbare Struktur (21-24) aufweist, die drehbar von der stationären Struktur (10) gelagert wird, um sich um eine entsprechende Achse (X) zu drehen, wobei die bewegbare Struktur eine Vorderseite (22), eine Rückseite (24) und einen peripheren Teil (21) aufweist,
wobei die bewegbare Struktur (21-24) eine Mehrzahl von Strömungskanälen (60, 61) aufweist, die sich von dem peripheren Teil (21) der bewegbaren Struktur (21-24) hin zu einer Mittelregion derselben erstrecken,
wobei die bewegbare Struktur (21-24) an einer Mittelregion ihrer Vorderseite (22) einen Impellereinlass (23) in Fluidverbindung mit dem Einlass (11) der stationären Struktur (10) und mit den Strömungskanälen (60, 61) aufweist, wobei der Impellereinlass (23) vorzugsweise im Wesentlichen zu einem Endabschnitt des Einlasses (11) der stationären Struktur (10) zeigt,
und wobei eine Antriebswelle (30) betreibbar auf eine solche Weise mit der Rückseite (24) der bewegbaren Struktur (21-24) verbunden ist,
so dass das Fluid, das von dem Einlass (11) der stationären Struktur (10) in die Turbine (1) eintritt, über den Impellereinlass (23) in die bewegbare Struktur (21-24) hineinströmt, um dann in die Strömungskanäle (60, 61) hinein zu strömen, und aus diesen in der Gestalt von Strahlen (J) über entsprechende Auslässe (70, 71) an dem peripheren Teil (21) der bewegbaren Struktur (21-24) austritt, und dadurch eine Drehung letzterer und somit der Antriebswelle (30) verursacht,
wobei die Vorderseite (22), die Rückseite (24) und der periphere Teil (21) der bewegbaren Struktur (21-24) einen Hohlraum der bewegbaren Struktur (21-24) begrenzen, in welchen sich die Strömungskanäle (60, 61) der Mehrzahl erstrecken, wobei die Vorderseite (22) und die Rückseite (24) der bewegbaren Struktur (21-24) vorzugsweise im Wesentlichen parallel zu einander sind, und wobei die Mehrzahl von Strömungskanälen (60, 61) umfasst:
- eine Mehrzahl von Kanälen (60), die sich von dem peripheren Teil (21) der bewegbaren Struktur (21-24) bis hin zu einer Mittelregion derselben erstrecken; und
- eine Mehrzahl von Kanälen (61), die sich von dem peripheren Teil (21) der bewegbaren Struktur (21-24) bis hin zu einer Zwischenregion derselben erstrecken, die räumlich zwischen dem peripheren Teil (21) und der Mittelregion umfasst ist,
wobei die Turbine (1) an dem Impellereinlass (23) weiter einen Strömungsteiler (25) umfasst, der in einer festen Position von der stationären Struktur (10) gelagert wird und konfiguriert ist, um die Strömung des in die bewegbare Struktur (21-24) eintretenden Fluids in eine Mehrzahl von Unterströmungen (F) zu unterteilen, und
wobei die Rückseite (24) der bewegbaren Struktur (21-24) in einer Mittelregion derselben ein im Wesentlichen kegelförmiges Ablenkglied (26) aufweist, das allgemein zu dem Impellereinlass (23) zeigt und das sich hin zu dem Strömungsteiler (25) erstreckt, wobei das Ablenkglied (26) konfiguriert ist, um Unterströmungen (F) hin zu den Strömungskanälen (60, 61) zu lenken.

2. Turbine nach Anspruch 1, wobei der Strömungsteiler (25) sich zumindest teilweise in die bewegbare Struktur (21-24) hinein erstreckt, hin zu einer Spitze des Ablenkglieds (26), wobei der Strömungsteiler (25) eine Oberseite aufweist, die sich vorzugsweise in einem Abstand von einer Spitze des Ablenkglieds (26) befindet, der zwischen 0,1 und 8 mm beträgt.

3. Turbine nach Anspruch 2, wobei der Strömungsteiler (25) eine Konfiguration aufweist, die allgemein in einer oberen Region desselben, einschließlich der Oberseite, konisch zuläuft.

4. Turbine nach Anspruch 1, wobei der Strömungsteiler (25) einen rohrförmigen Mantel (25a) beinhaltet, der ein oberes Ende und ein unteres Ende und eine oder mehrere Trennwände (25b), die einen Innenraum des rohrförmigen Mantels (25a) in eine Mehrzahl von Unterkanälen (25c) teilen, aufweist.

5. Turbine nach Anspruch 4, wobei die einen oder mehreren Trennwände (25b) drei Wände umfassen, die sich radial von einer Mittelachse des rohrförmigen Mantels (25a) erstrecken und den jeweiligen Innenraum in drei axiale Unterkanäle (25c) teilen.

6. Turbine nach Anspruch 4 oder 5, wobei jede Trennwand (25b) zumindest an dem entsprechenden oberen Ende in einer axialen Richtung von dem rohrförmigen Mantel (25a) hervorsteht.

7. Turbine nach einem der Ansprüche 4-6, wobei jede Trennwand (25b) einen allgemein konisch zulaufenden oberen Teil aufweist, mit einem oberen Rand, der sich geneigt zwischen einer Oberseite der Trennwand (25b) und einem oberen Rand des Mantels (25a) erstreckt.

8. Turbine nach Anspruch 1, wobei die Mehrzahl von Strömungskanälen (60, 61) eine Mehrzahl von primären Kanälen (60) und eine Mehrzahl von sekundären Kanälen (61) umfasst, wobei die primären Kanäle (60) einen Einlass aufweisen, der näher an dem Impellereinlass (23) ist, als der Einlass der sekundären Kanäle (61), und wobei jeder primäre Kanal (60) in eine Mehrzahl von sekundären Kanälen (61) unterteilt ist oder sonst ein oder mehrere sekundäre Kanäle (61) zwischen die primären Kanäle (60) gesetzt ist/sind.

9. Turbine nach Anspruch 8, wobei die sekundären Kanäle (61) jeweils einen entsprechenden Auslass (70, 71) aufweisen, der eine Düse (70) an der peripheren Wand (21) der bewegbaren Struktur (21-24) umfasst.

10. Turbine nach Anspruch 1 oder Anspruch 8, wobei innerhalb eines Hohlraums der bewegbaren Struktur (21-24) eine Mehrzahl von Wänden (62, 63) die Strömungskanäle (60, 61) seitlich begrenzen.

11. Turbine nach Anspruch 10, wobei die Wände (62, 63) gekrümmte Wände sind.

12. Turbine nach Anspruch 1, wobei die Turbine (1) eine Mehrzahl von Kontrastelementen (40) umfasst, die entlang eines Umfangs gesetzt sind und von der stationären Struktur (10) gelagert werden, in einer Position, in der sie allgemein auf den peripheren Teil (21) der bewegbaren Struktur (21-24), wo die Auslässe (70, 71) sich befinden, zeigen.

13. Turbine nach Anspruch 12, wobei die Kontrastelemente (40) auf der stationären Struktur (10) montiert sind, so dass sie winkelmäßig um entsprechende Achsen bewegbar sind, die allgemein parallel zu der Rotationsachse (X) der bewegbaren Struktur (21-24) sind, um die Position einer Kontrastfläche der Kontrastelemente (40) bezüglich der Strahlen (J) des aus den Auslässen (70, 71) der Strömungskanäle (60, 61) austretenden Fluids zu variieren, und
wobei die Turbine (1) mindestens ein Betätigungssystem (44; 47, 55-58) aufweist, um die winkelmäßige Position der Kontrastelemente (40) um die entsprechenden Achsen auf kontrollierte Weise zu variieren und dabei den Einfallswinkel der Strahlen (J) des aus den Auslässen (70, 71) austretenden Fluids bezüglich der Kontrastfläche der Kontrastelemente (40) zu variieren.

14. Turbine nach Anspruch 13, wobei das Betätigungssystem (44, 47, 55-58) ausgelegt ist, um die winkelmäßige Position der Kontrastelemente (40) um die entsprechenden Achsen als eine Funktion eines Drucks des Fluids stromaufwärts von dem Impellereinlass (23) zu variieren.

15. Turbine nach Anspruch 13, wobei
- die stationäre Struktur (10) mindestens eines von einem ersten Teil (15), das zu der Vorderseite (22) der bewegbaren Struktur (21-24) zeigt, und einem zweiten Teil (16), das zu der Rückseite (24) der bewegbaren Struktur (2-24) zeigt, beinhaltet,
- die Kontrastelemente (40) an einer peripheren Region eines der ersten und zweiten Teile (15, 16) der stationären Struktur (10) montiert sind, wobei jedes Kontrastelement (40) einen jeweiligen Körper beinhaltet, der von einer jeweiligen Welle (42) getragen wird, die zu dem einen der ersten und zweiten Teile (15, 16) der stationären Struktur (10) zugehörig ist,
- das Betätigungssystem (44, 47, 55-58) umfasst:
- ein drehbares Element (44), das derart an der stationären Struktur (10) beschränkt ist, dass es winkelmäßig um die Rotationsachse (X) der bewegbaren Struktur (21-24) bewegbar ist;
- Übertragungsmittel (55-58) zum Verbinden der Wellen (42) der Kontrastelemente (40) mit dem drehbaren Element (44); und
- Betätigungsmittel (47), die ausgelegt sind, um Winkelbewegungen des drehbaren Elements (44) bezüglich der stationären Struktur (10) zu bewirken, so dass eine von den Betätigungsmitteln (47) verursachte Winkelbewegung des drehbaren Elements (44) von den Übertragungsmitteln (55-58) auf die Wellen (42) der Kontrastelemente (40) übertragen wird und dadurch eine jeweilige Winkelbewegung der Kontrastelemente (40) um die jeweiligen Achsen bewirkt wird.

## Revendications

1. Turbine, comprenant une structure fixe (10), ayant une entrée (11) pour raccordement à une ligne d'alimentation (D) pour l'écoulement d'un fluide, et une hélice (20), ayant une structure creuse mobile (21-24) supportée de manière rotative par la structure fixe (10) pour tourner autour d'un axe respectif (X), la structure mobile ayant un avant (22), un arrière (24) et une partie périphérique (21),
dans laquelle la structure mobile (21-24) a une pluralité de canaux d'écoulement (60, 61) qui s'étendent de la partie périphérique (21) de la structure mobile (21-24) vers une région centrale de celle-ci,
dans laquelle la structure mobile (21-24) a, dans une région centrale de son avant (22), une entrée d'hélice (23) en communication fluidique avec l'entrée (11) de la structure fixe (10) et avec les canaux d'écoulement (60, 61), l'entrée d'hélice (23) étant de préférence sensiblement en regard d'une section d'extrémité de l'entrée (11) de la structure fixe (10), et
dans laquelle un arbre d'entraînement (30) est raccordé de manière opérationnelle à l'arrière (24) de la structure mobile (21-24),
de telle manière que le fluide qui entre dans la turbine (1) par l'entrée (11) de la structure fixe (10) s'écoule dans la structure mobile (21-24) via l'entrée d'hélice (23) pour s'écouler ensuite dans les canaux d'écoulement (60, 61) et en sorte sous la forme de jets (J) via des sorties respectives (70, 71) dans la partie périphérique (21) de la structure mobile (21-24), en provoquant ainsi une rotation de celle-ci, et donc de l'arbre d'entraînement (30),
dans laquelle l'avant (22), l'arrière (24) et la partie périphérique (21) de la structure mobile (21-24) délimitent un volume creux de la structure mobile (21-24), dans laquelle les canaux d'écoulement (60, 61) de ladite pluralité s'étendent, l'avant (22) et l'arrière (24) de la structure mobile (21-24) étant de préférence sensiblement parallèles l'un à l'autre, et dans laquelle la pluralité de canaux d'écoulement (60, 61) comprend :
- une pluralité de canaux (60) qui s'étendent de la partie périphérique (21) de la structure mobile (21-24) aussi loin qu'une région centrale de celle-ci ; et
- une pluralité de canaux (61) qui s'étendent de la partie périphérique (21) de la structure mobile (21-24) aussi loin qu'une région intermédiaire de celle-ci qui est comprise spatialement entre la partie périphérique (21) et ladite région centrale,
dans laquelle la turbine (1) comprend en outre, à l'entrée d'hélice (23), un diviseur d'écoulement (25) supporté en position fixe par la structure fixe (10) et configuré pour subdiviser l'écoulement du fluide pénétrant dans la structure mobile (21-24) en une pluralité de sous-écoulements (F), et
dans laquelle l'arrière (24) de la structure mobile (21-24) a, dans une région centrale de celle-ci, un élément déflecteur sensiblement conique (26) qui est généralement en regard de l'entrée d'hélice (23) et qui s'étend vers le diviseur d'écoulement (25), l'élément déflecteur (26) étant configuré pour diriger les sous-écoulements (F) vers les canaux d'écoulement (60, 61).

2. Turbine selon la revendication 1, dans laquelle le diviseur d'écoulement (25) s'étend au moins en partie dans la structure mobile (21-24) vers une pointe de l'élément déflecteur (26), le diviseur d'écoulement (25) ayant un sommet qui est de préférence à une distance d'une pointe de l'élément déflecteur (26) comprise entre 0,1 et 8 mm.

3. Turbine selon la revendication 2, dans laquelle le diviseur d'écoulement (25) a une configuration qui est généralement conique dans une région supérieure de celui-ci comprenant ledit sommet.

4. Turbine selon la revendication 1, dans laquelle le diviseur d'écoulement (25) comprend une chemise tubulaire (25a) ayant une extrémité supérieure et une extrémité inférieure, et une ou plusieurs parois de division (25b) qui divisent un volume interne de la chemise tubulaire (25a) en une pluralité de sous-canaux (25c).

5. Turbine selon la revendication 4, dans laquelle lesdites une ou plusieurs parois de division (25b) comprennent trois parois qui s'étendent radialement à partir d'un axe central de la chemise tubulaire (25a) et divisent le volume interne correspondant en trois sous-canaux axiaux (25c).

6. Turbine selon la revendication 4 ou 5, dans laquelle chaque paroi de division (25b) fait saillie dans une direction axiale à partir de la chemise tubulaire (25a) au moins à l'extrémité supérieure correspondante.

7. Turbine selon l'une quelconque des revendications 4 à 6, dans laquelle chaque paroi de division (25b) a une partie supérieure généralement conique avec un bord supérieur qui s'étend incliné entre un sommet de la paroi de division (25b) et un bord supérieur de la chemise (25a).

8. Turbine selon la revendication 1, dans laquelle la pluralité de canaux d'écoulement (60, 61) comprend une pluralité de canaux primaires (60) et une pluralité de canaux secondaires (61), les canaux primaires (60) ayant une entrée qui est plus proche de l'entrée d'hélice (23) que l'entrée des canaux secondaires (61), et dans laquelle chaque canal primaire (60) est subdivisé en une pluralité de canaux secondaires (61) ou un ou plusieurs canaux secondaires (61) est ou sont disposés entre les canaux primaires (60).

9. Turbine selon la revendication 8, dans laquelle les canaux secondaires (61) ont chacun une sortie respective (70, 71) comprenant une buse (70) au niveau de la paroi périphérique (21) de la structure mobile (21-24).

10. Turbine selon la revendication 1 ou la revendication 8, dans laquelle, dans un volume creux de la structure mobile (21-24), une pluralité de parois (62, 63) délimite les canaux d'écoulement (60, 61) latéralement.

11. Turbine selon la revendication 10, dans laquelle lesdites parois (62, 63) sont des parois incurvées.

12. Turbine selon la revendication 1, dans laquelle la turbine (1) comprend une pluralité d'éléments de contraste (40) qui sont établis le long d'une circonférence et sont supportés par la structure fixe (10) dans une position faisant face généralement à la partie périphérique (21) de la structure mobile (21-24) où les sorties (70, 71) sont situées.

13. Turbine selon la revendication 12, dans laquelle les éléments de contraste (40) sont montés sur la structure fixes (10) de manière à être mobiles angulairement autour d'axes respectifs généralement parallèles à l'axe de rotation (X) de la structure mobile (21-24) afin de modifier la position d'une surface de contraste des éléments de contraste (40) par rapports aux jets (J) du fluide sortant par les sorties (70, 71) des canaux d'écoulement (60, 61) et
dans laquelle la turbine (1) a au moins un système d'actionnement (44; 47, 55-58) pour modifier de manière réglée la position angulaire des éléments de contraste (40) autour des axes respectifs, en modifiant de la sorte l'angle d'incidence des jets (J) du fluide sortant par les sorties (70, 71) par rapport à la surface de contraste des éléments de contraste (40).

14. Turbine selon la revendication 13, dans laquelle le système d'actionnement (44, 47, 55-58) est conçu pour modifier la position angulaire des éléments de contraste (40) autour des axes respectifs en fonction d'une pression du fluide en amont de l'entrée d'hélice (23).

15. Turbine selon la revendication 13, dans laquelle :
- la structure fixe (10) comprend au moins l'une d'une première partie (15) en regard de l'avant (22) de la structure mobile (21-24) et d'une seconde partie (16) en regard de l'arrière (24) de la structure mobile (21-24),
- les éléments de contraste (40) sont montés dans une région périphérique de l'une des première et seconde parties (15, 16) de la structure fixe (10), chaque élément de contraste (40) comprenant un corps respectif porté par un arbre correspondant (42) associé à ladite une des première et seconde parties (15, 16) de la structure fixe (10),
- le système d'actionnement (44, 47, 55-58) comprend :
- un élément rotatif (44) fixé à la structure fixe (10) pour être mobile angulairement autour de l'axe de rotation (X) de la structure mobile (21-24) ;
- des moyens de transmission (55-58) pour raccorder les arbres (42) des éléments de contraste (40) audit élément rotatif (44) ; et
- des moyens d'actionnement (47) conçus pour provoquer des mouvements angulaires de l'élément rotatif (44) par rapport à la structure fixe (10),
de sorte qu'un mouvement angulaire dudit élément rotatif (44), provoqué par les moyens d'actionnement (47), soit transféré par lesdits moyens de transmission (55-58) aux arbres (42) des éléments de contraste (40), en provoquant ainsi un mouvement angulaire correspondant des éléments de contraste (40) autour des axes respectifs.
